(19) Europäisches Patentamt
European Patent Office
Office européen des brevets

(11) **EP 2 322 911 A1**

(12) **EUROPÄISCHE PATENTANMELDUNG**

(43) Veröffentlichungstag:
**18.05.2011 Patentblatt 2011/20**

(51) Int Cl.:
***G01N 15/14*** *(2006.01)* ***G01N 1/08*** *(2006.01)*

(21) Anmeldenummer: **09175995.1**

(22) Anmeldetag: **13.11.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Bühler AG**
**9240 Uzwil (CH)**

(72) Erfinder:
• **Heine, Martin**
**8472, Seuzach (CH)**
• **Manz, Stefan**
**78467, Konstanz (DE)**

(74) Vertreter: **Hepp, Dieter et al**
**Hepp Wenger Ryffel AG**
**Friedtalweg 5**
**9500 Wil (CH)**

(54) **Vorrichtung zum Bestimmen von Partikelgrössen**

(57)     Verfahren zur Messung von Partikelgrössenverteilungen, insbesondere zur optischen Messung von breiten Partikelgrössenverteilungen von Schüttgütern wie Getreide, Getreidevermahlungsprodukten, Getreideprodukten und dergleichen, die eine Messung von grössenordnungsmässig breiten Partikelgrössenverteilungen ermöglichten soll. Zur Lösung dieser Aufgabe ist vorgesehen, dass eine Probe von vereinzelten Partikeln mittels mindestens zweier Messverfahren in einer Anordnung optisch erfasst wird, wobei bevorzugt gleichzeitig Konturen der Partikel erfasst werden und eine Laserbeugung erfolgt.

FIG. 1

EP 2 322 911 A1

**Beschreibung**

Die Erfindung betrifft ein Verfahren zur Messung einer Grössenverteilung von Partikeln, insbesondere zur optischen Online-Messung vereinzelter Partikel von Schüttgütern mit breiten Partikelgrössenverteilungen. Die Erfindung betrifft weiterhin eine Vorrichtung zur Messung von derartigen Partikelgrössenverteilungen.

Die Erfassung von Partikelgrössen und deren Verteilung sowie auch die Ermittlung von Inhaltsstoffen mittels eines spezifischen Messprinzips an sich sind bekannt. So zeigt z. B. DE-C-19802141 eine Vorrichtung zur Bestimmung der Partikelgrössenverteilung durch elektrooptische Abtastung eines Produktstroms mittels einer optoelektronischen Messstrecke. Die dort beschriebene Bilderfassungseinrichtung enthält eine Mehrzahl von elektrooptischen Bildaufzeichnungsgeräten. Eine solche Vorrichtung eignet sich zur Messung von Partikeln mit Partikelgrössen von mehr als 100 $\mu$m. Nachteilig an dieser Vorrichtung und der Messmethode ist, dass vor allem für kleinere Partikel mit Partikelgrössen unterhalb von 100 $\mu$m der Messaufwand und/oder Messfehler mit abnehmender Partikelgrösse stark zunehmen. Ursachen hierfür können beispielsweise mangelnde optische Auflösung, optisch verzerrte Partikelkonturen, mangelnde Schärfentiefe, Störungen aufgrund von Lichtbeugungs- oder Lichtstreuungseffekten und/oder Bewegungsunschärfe sein.

Ebenfalls bekannt sind Vorrichtungen zur Erfassung von Partikeln durch Laserbeugung oder Laserstreuung. Hiermit können kleine Partikel mit Partikelgrössen im Bereich von etwa 1 $\mu$m bis etwa 100 $\mu$m gut erfasst werden. Nachteilig hingegen ist der hohe Aufwand für das gleichzeitige Erfassen grösserer Partikel, vor allem mit Partikelgrössen oberhalb von 1 mm, die geringere Messgenauigkeit in diesem Bereich, vor allem für stark von der Kugelform abweichende Partikel, und der geringe Informationsgehalt der Messmethode. Insbesondere können lediglich die projektionsflächenbezogene Partikelgrössenverteilung und teilweise die Partikelkonzentration gemessen werden. Informationen über die detaillierten Konturen der Partikel, wie sie bei der Bildverarbeitung ermittelt werden, fehlen. Farbe, Geschwindigkeit oder andere Partikeleigenschaften können ebenfalls nicht mit der Laserbeugung ermittelt werden.

Nach dem Stand der Technik wird die Erfassung von Messwerten mittels nur eines einzigen Messprinzips vorgenommen, was den Anwendungsbereich begrenzt und/oder einen hohen Aufwand erfordert.

Der Erfindung liegt daher die Aufgabe zugrunde, ein Verfahren zur Bestimmung einer Grössenverteilung von Partikeln, insbesondere zur optischen Messung von Partikelgrössenverteilungen, zu entwickeln, welches die Nachteile des Standes der Technik meidet und die insbesondere eine in die Schüttgutverarbeitung integrierte Online-Messung von sich über mehrere Grössenordnungen erstreckenden Partikelgrössenverteilungen ermöglicht.

Diese Aufgabe wird durch ein Verfahren zur Bestimmung einer Grössenverteilung von Partikeln gelöst, welches zumindest die folgenden Schritte enthält:

a) Herstellung eines Partikel enthaltenden Produktstromes mittels eines Herstellungsverfahrens oder Bereitstellung eines Partikel enthaltenden Produktstromes, welcher mittels eines Herstellungsverfahrens hergestellt wurden,
b) Erzeugung von Messdaten durch Erfassung zumindest eines Teils der Partikel, wobei die Messdaten wenigstens durch optische Erfassung des Teils der Partikel mittels mindestens zweier verschiedener optischer Messverfahren erzeugt werden,
c) Bestimmung zumindest einer Eigenschaft des Teils der Partikel anhand der in Schritt b) optisch erfassten Messdaten, wobei wenigstens eine Eigenschaft die Grössenverteilung des Teils der Partikel ist.

Das Herstellungsverfahren ist ausgewählt aus der Gruppe bestehend aus Zerkleinerungs-, Reinigungs-, Trenn-, Misch- und Agglomerationsverfahren oder beliebigen Kombinationen hiervon. Bei dem Zerkleinerungsverfahren kann es sich beispielsweise um ein Mahlverfahren handeln.

Erfindungsgemäss umfasst mindestens ein optisches Messverfahren die Erfassung eines Beugungsmusters des Teils der Partikel.

Die gleichzeitige Erfassung mittels mindestens zweier verschiedener optischer Messverfahren ermöglicht die Messung eines grösseren Bereichs von Partikelgrössen, als dies mit nur einem einzigen optischen Messverfahren möglich wäre. So können mit dem erfindungsgemässen Verfahren etwa Partikelgrössenverteilungen über einen Bereich von bis zu vier Partikelgrössenordnungen erfasst werden. Beispielsweise können Partikelgrössen in einem Bereich von 2 $\mu$m bis 20 mm erfasst werden, bevorzugt in einem Bereich von 5 $\mu$m bis 5 mm. Vor allem die erfindungsgemässe Erfassung eines Beugungsmusters erlaubt die Messung von besonders kleinen Partikelgrössen. Hierdurch wird eine bessere Aussagefähigkeit über die Partikelgrössen und deren Verteilung im Produktstrom erzielt. Dies wiederum ermöglicht eine gezielte Anpassung der Herstellungs- und Verarbeitungsparameter von Partikel enthaltenden Schüttgütern, insbesondere von Getreidemahlprodukten.

Die Messung erfolgt bevorzugt online. Darunter wird hier und im Folgenden verstanden, dass die Messung in einem Prozess integriert ist. Insbesondere findet die Messung räumlich unmittelbarer Nähe des Prozesses statt.

Das Verfahren kann beispielsweise in den folgenden Gebieten eingesetzt werden:

- Verarbeitung von Getreide, Getreidevermahlungsprodukten und Getreideendprodukte der Müllerei (insbesondere Vermahlen von Weichweizen, Durum, Roggen, Mais und/oder Gerste) oder Spezialmüllerei (insbesondere Schälen und/oder Vermahlen von Soja, Buchweizen, Gerste, Dinkel, Hirse/Sorghum, Pseudocerealien und/oder Hülsenfrüchten);

- Herstellung von Futter für Nutz- und Haustiere, Fische und Krustentiere;

- Verarbeitung von Ölsaaten;

- Verarbeitung von Biomasse und Herstellung von Energiepellets;

- industrielle Mälzerei- und Schroterei-Anlagen;

- Verarbeitung von Kakaobohnen, Nüssen und Kaffeebohnen;

- Herstellung von Baustoffen;

- Herstellung von Düngemitteln;

- Pharmaindustrie;

- Feststoffchemie.

Bevorzugt wird aus dem in Schritt a) hergestellten oder bereitgestellten Produktstrom eine Partikel enthaltende Probe entnommen, wobei in Schritt b) die Partikel in dieser Probe optisch erfasst werden. Bei dieser Ausführung müssen also die Partikel nicht im Produktstrom gemessen werden. Stattdessen kann die eigentliche Messung im Schritt b) an der entnommenen Probe erfolgen, was die räumliche Anordnung von Messeinrichtungen extrem vereinfachen kann, die die Messverfahren durchführen.

In möglichen Ausführungsformen kann die Entnahme einer Probe in einem Fallrohr erfolgen, beispielsweise mit Hilfe einer Schneckenschale. Die Entnahme kann zeitlich gepulst sein. Der Anteil der Probe bezogen auf den gesamten Produktstrom kann zwischen 0,01 % und 10 % betragen. Hierdurch kann ein repräsentativer Teilstrom näherungsweise kontinuierlich ohne weiteren Zwischenspeicher der Messung zugeführt werden.

In einigen Ausführungsformen kann die Probe dosiert, vereinzelt und/oder dispergiert werden, bevor die eigentliche Messung im Schritt b) erfolgt. Die Dosierung stellt sicher, dass die richtige Produktmenge möglichst pulsationsarm den Messeinrichtungen zugeführt wird. Beim Vereinzeln und Dispergieren, beispielsweise nach dem Venturiprinzip, kann der Produktstrom hingegen in einigen Fällen nicht mehr reguliert werden. Hier kann das Produkt mit Druckluft und weiterer aus der Umgebung angesaugter Luft verdünnt werden, damit alle Partikel einzeln vorliegen und somit auch einzeln detektiert werden können. Dieser zweite Schritt kann separat von der Dosierung optimiert werden, um das Produkt je nach Beschaffenheit (z.B. Stärke der interpartikulären Haftkräfte) verschieden stark vereinzeln zu können. Der Übergang von Vereinzeln und Zerkleinern ist fliessend. Vereinzeln und Dispergieren können in einigen Fällen als ein untrennbarer Schritt angesehen werden.

In bevorzugten Ausführungsformen umfasst mindestens eines der Messverfahren in Schritt b) die Erfassung von Projektionsflächen des Teils der Partikel. Die Partikelkonturen dieser Projektionsflächen können dann mittels einer Partikelkonturverarbeitung verarbeitet werden.

Bevorzugt wird die Bestimmung der Grössenverteilung mindestens einer Grobfraktion des Teils der Partikel mittels Partikelkonturverarbeitung durchgeführt, insbesondere in einem Grössenbereich von 10 $\mu$m bis 30000 $\mu$m, bevorzugt von 50 $\mu$m bis 20000 $\mu$m, besonders bevorzugt von 90 $\mu$m bis 10000 $\mu$m.

Ebenfalls bevorzugt wird die Bestimmung der Grössenverteilung mindestens einer Feinfraktionen des Teils der Partikel mittels Laserbeugung durchgeführt, insbesondere in einem Grössenbereich von 0.1 $\mu$m bis 300 $\mu$m, be-vorzugt von 1 $\mu$m bis 300 $\mu$m, besonders bevorzugt von 5 $\mu$m bis 200 $\mu$m.

In einigen Ausführungsformen kann anhand der optisch erfassten Messdaten neben der Grössenverteilung des Teils der Partikel die Form, der Formfaktor, die Farbe, ein Farbanteil und/oder die Geschwindigkeit des Teils der Partikel bestimmt werden. Ein Formfaktor reduziert eine beliebig komplizierte Kontur eines Partikels auf einen Wert. Ein Formfaktor kann z.B. ein Mass für die "Rundheit" eines Partikels sein und könnte als Quotient der Durchmesser des flächengleichen und des umfangsgleichen Kreises definiert werden. Typische Formfakturen sind beispielsweise "elongation", "chunkiness", "sphericity", "convexity" und "circularity". Stippen und Stärkepartikel können beispielsweise daran unterschieden werden, dass die Circularity (Rundheit) der Stippe stärker von dem Wert einer Kugel abweicht.

Farbe und/oder Farbanteil können beispielsweise mit einem Farb-sensor bestimmt werden, insbesondere mit einem Farbbildsensor. Ein System und ein Verfahren zur Mahlgut-Charakterisierung mit einem Farbbildsensor sind beispielsweise in der internationalen Patentanmeldung PCT/EP2009/055877 beschrieben. Ein solcher Farbbildsensor kann die Verwendung von Farbinformation für die Charakterisierung der Partikel eines Mahlgutstroms ermöglichen, indem die Partikel mittels der von ihnen abgestrahlten elektromagnetischen Strahlung auf einen Farbbildsensor abgebildet werden, der die elektromagnetische Strahlung dann auf seinen Sensor-Bildelementen spektral selektiv erfasst. Der Farbbildsensor ist bevorzugt ein CCD-Sensor, mit dem das unten beschriebene Verfahren zur Geschwindigkeitsmessung der Partikel umgesetzt werden kann.

Im Besonderen kann eine Kombination von Auflicht- und Durchlichtbeleuchtung eingesetzt werden. Dies ermöglicht es, durch die Auflichtbeleuchtung die Farbinformation und mit Durchlicht eine gegenüber einer reinen Auflichtbeleuchtung höhere Konturschärfe insbesondere auch für schnelle Partikel (z.B. mit Durchmessern von etwa 200 $\mu$m und Geschwindigkeiten von etwa 20 m/s) zu erzielen. Derartige Kombinationen von Auflicht- und Durchlichtbeleuchtung sind etwa in PCT/EP2009/055877 beschrieben.

Insbesondere können eine oder mehrere dieser Eigenschaften (Form, der Formfaktor, die Farbe, ein Farbanteil und/oder die Geschwindigkeit) mittels Echtzeitauswertung bestimmt werden.

Optional kann nach Schritt c) eine Kalibrierung der im Schritt c) erhaltenen Eigenschaften des Teils der Partikel erfolgen, also eine Datenaufbereitung und ein Vergleich der Eigenschaften mit jeweiligem Prozess-Know-How. Bei einer solchen Kalibrierung werden die von der Laserbeugung und Konturverarbeitung zunächst getrennt ermittelten Partikelgrössenverteilungen zu einer gemeinsamen Verteilung über den gesamten Messbereich zusammenzufassen. Gemäss einer ersten Methode kann der Überlappungsbereich der mit den beiden Messverfahren erzeugten Messdaten genutzt werden, um die beiden Partikelgrössenverteilungen zu normieren und zu vereinen. Gemäss einer zweiten Methode kann die Gesamtflächenbelegung der mit beiden Messverfahren erzeugten Messdaten gemessen werden und gemeinsam mit dem jeweiligen Messvolumen zur Normierung der Verteilungen verwendet werden.

Das Ergebnis beider Methoden ist eine projektionsflächenbezogene Verteilung, die von der technisch relevanteren Massenverteilung abweicht. "Prozess-Know-How" kann hier eingesetzt werden, um eine geeignete Umrechnung zu definieren. Schalenteile sind beispielsweise eher scheibenförmig und Mehlpartikel eher kugelförmig. Bei der Umrechnung von Flächen- in Massenverteilung kann dies berücksichtigt werden, indem beispielsweise aufgrund von Farbe oder Formfaktoren Mehl und Schalenteile unterschieden und anders gewichtet werden.

Es ist weiterhin denkbar, den Einfluss eines Mahlapparats auf die Form der Schalenteile zu berücksichtigen. Die Riffelung und vor allem der Mahlspalt des Mahlapparats bestimmen beispielsweise die mittlere Höhe der eher scheibenförmigen Schalenteile.

Das Verfahren kann zur Optimierung, Regelung, insbesondere Online-Regelung, Modellierung, Simulation, Überwachung, insbesondere Online-Überwachung, Fehlererkennung, Fehlerdiagnose, Qualitätskontrolle und/oder Rückverfolgbarkeit einer Maschine, eines Maschinenverbundes, eines Prozesses und/oder einer Anlage verwendet werden. Derartige Verfahren sind beispielsweise in der internationalen Patentanmeldung PCT/EP2009/058351 beschrieben.

Ebenfalls optional können insbesondere von mindestens einer Messeinrichtung erfasste Messdaten, insbesondere von mindestens einer optischen Messeinrichtung ermittelte Messdaten, archiviert werden. Aus den archivierten Messdaten können Kennzahlen, Regeln und Schlussfolgerungen für das Betreiben und/oder Konfigurieren von einzelnen oder mehreren Maschinen und/oder Anlagen und/oder Prozessen abgeleitet werden. Beispielsweise kann das Verhalten einer Gesamtmühle durch die zahlreichen und komplexen Interaktionen der einzelnen Maschinen nicht vollständig beschrieben werden. Um eine Regelung einer Gesamtanlage dennoch zu ermöglichen, kann eine selbstlernende und/ oder erfahrungsbasierte Regelung verwendet werden. Hierzu können etwa die Messsignale der Sensoren in Zusammenhang mit einem gewünschten oder ungewünschten Zustand der Gesamtmühle gebracht werden und in einer Datenbank archiviert werden. Auf einer solchen Datenbank kann ein Regelalgorithmus basieren, der gezielt ungewünschte Mühlenzustände vermeidet. Derartige Anlagen mit lokalen und/oder globalen Regelungssystemen sind beispielsweise in der internationalen Anmeldung PCT/EP2009/058351 beschrieben.

Ausserdem können optional Rohmessdaten der Messeinrichtungen und/oder aus diesen Rohmessdaten aufbereitete Daten als Erfahrungswerte in adaptiven Systemen, wie beispielsweise neuronalen Netzen, verwendet werden, insbesondere zur Steuerung und/oder Regelung von Maschinen und/oder Anlagen und/oder Prozessen. Beispielsweise könnte ein neuronales Netzwerk die oben beschriebenen archivierten Messdaten nutzen. Auch mit Hilfe einer so genannten "fuzzy control" könnten diese Messdaten genutzt werden. Messdaten könnten als verarbeitete Daten (z.B. eine aus den beiden Messverfahren abgeleitete Partikelmassenverteilung) oder in weniger verarbeitetem Zustand (z.B. zwei separate Flächenverteilungen) archiviert werden.

Weiterhin optional können Rohmessdaten der Messeinrichtungen oder nicht vollständig zu Partikelgrössenverteilungen verarbeitete Messdaten der Messeinrichtungen, insbesondere ein über mehrere Einzelmessungen gemitteltes Laserbeugungsspektrum, direkt für eine Regelung verwendet werden.

Aus einem mit dem Verfahrenen aufgenommenen Beugungsbild kann etwa durch kreisförmige Integration um das Bildzentrum ein Laserbeugungsspektrum berechnet werden. Dieses gibt an, wie viel Lichtmenge wie weit gebeugt wurde. Für eine konstante Partikelgrössenverteilung ist auch dieses Beugungsspektrum beziehungsweise dessen Mittelwert gemittelt über eine ausreichende Menge von Einzelmessungen konstant. Ein zu starkes Vermahlen führt zu feineren Partikeln und daher zu stärkerer Laserbeugung, also mehr Lichtenergie bei grösseren Radien. Zu geringe Vermahlung führt hingegen zu geringerer Laserbeugung. Das Laserbeugungsspektrum kann also unmittelbar für eine Regelung (z.B. der Breite eines Mahlspaltes zwischen zwei Walzen) eingesetzt werden, ohne die eigentliche Partikelgrössenverteilung zu rekonstruieren. Letzterer Schritt braucht viel Rechenzeit und kann mathematische Fehler bzw. Ungenauigkeiten verursachen, die die Regelung negativ beeinflussen. Eine Regelung basierend auf dem Laserbeugungsspektrum kann dieses Problem vermeiden.

In einigen Ausführungsformen wird mindestens ein Prozessparameter des Herstellungsverfahrens anhand der in Schritt c) bestimmten Eigenschaft, insbesondere anhand der Grössenverteilung des Teils der Partikel, gesteuert und/oder geregelt. Insbesondere kann der mindestens eine Prozessparameter derart gesteuert und/oder geregelt werden, dass hierdurch die Grössenverteilung der Partikel verändert wird. Somit ist es möglich, eine Ist-Grössenverteilung auf eine vorgegebene Soll-Grössenverteilung einzuregeln.

Insbesondere im Falle eines Zerkleinerungsverfahrens, also beispielsweise eines Mahlverfahrens, kann es sich bei zumindest bei einem Prozessparameter um eine Breite mindestens eines Mahlspaltes, eine Drehzahl mindestens eines Mahlkörpers, ein Drehzahlverhältnis zweier Mahlkörper, eine Geometrie eines Mahlkörpers und/oder einer Mahlwalze und/oder einen Massendurchsatz eines zu mahlenden Produktes handeln. Die Geometrie einer Mahlwalze kann beispielsweise deren Riffelung beinhalten.

In einer Weiterbildung des Verfahrens können Geschwindigkeitsmessungen einzelner Partikel oder über das gesamte oder Teilbereiche eines Messbereichs örtlich gemittelter Geschwindigkeitsmessungen für Partikelgrössenklassen zur Korrektur der Partikelgrössenverteilungen aufgrund unterschiedlicher Aufenthaltswahrscheinlichkeit von Partikeln beziehungsweise Partikelgrössenklassen im Messbereich der Messeinrichtung verwendet werden. Hierdurch können die Messgenauigkeit und die Zuverlässigkeit gegenüber bekannten Verfahren erhöht werden.

In Zweiphasenströmungen mit breiten Partikelgrössenverteilungen korrelieren Partikelgeschwindigkeiten im Allgemeinen mit Partikelgrösse, Partikelform und spezifischem Gewicht. In einer beschleunigten Strömung haben z.B. grössere Partikel aufgrund ihrer meist höheren Masse geringere Geschwindigkeiten als kleinere Partikel. Die Partikelgeschwindigkeit kann die Verweilzeit der Partikel im Messbereich und damit unmittelbar die Detektionswahrscheinlichkeit des Partikels bestimmen. Um dies zu berücksichtigen, kann die optisch bestimmte Partikelgrössenverteilung diesbezüglich korrigiert werden. Die relativen oder absoluten Geschwindigkeiten können dabei für die individuellen Partikel oder zumindest gemittelt für jede relevante Partikelgrössenklasse bestimmt werden. Die Gewichtung jeder Partikelgrössenklasse ergibt sich dann als Funktion aus Partikelgeschwindigkeit und Partikelgrösse (z.B. Projektionsfläche, Durchmesser oder geschätztes Volumen). Die Bestimmung von Objektgeschwindigkeiten in Kombination mit Partikelkonturerkennung an sich ist Stand der Technik. Hierdurch kann die Geschwindigkeitsverteilung grosser Partikel unmittelbar gemessen werden. Der durch Beugung, insbesondere durch Laserbeugung, gemessene Feinanteil der Grössenverteilung hat aufgrund der kleineren Partikeldimensionen und Massen nahezu konstante Geschwindigkeit. Letztere kann durch Extrapolation aus der Geschwindigkeitsmessung mit Partikelkonturverarbeitung bestimmt werden.

Optisch erfasste Objekte mit Nullgeschwindigkeiten sind beispielsweise optische Fehler oder Kratzer der Sichtfenster oder ortsfeste oder langsam kriechende Verschmutzungen (mit Geschwindigkeiten, die wesentlich kleiner als 1 m/s sind) wie anhaftende Partikel oder Partikelinhaltsstoffe, wie im Fall von Getreideprodukten beispielsweise Proteine oder Fette. Diese sind nicht Teil der gesuchten Partikelgrössenverteilung. Durch eine etwa wie oben beschriebene Geschwindigkeitskorrektur können diese automatisch mit 0 gewichtet werden und verzerren daher nicht die Ergebnisse der Partikelgrössenverteilung.

Alternativ können bei der Partikelkonturverarbeitung ruhende oder kriechende Objekte mit einem separaten Algorithmus aus den Messdaten gefiltert werden. Hierzu kann beispielsweise die Betragsdifferenz zweier vom Sensor ermittelter Bilder, vorzugsweise zweier direkt aufeinander folgender Bilder, anstelle eines einfachen Bilds ausgewertet werden. Hierdurch kürzen sich ortsfeste Defekte oder nahezu ortsfeste Verschmutzungen automatisch und sind im Differenzbild nicht mehr sichtbar. Alternativ können gehäuft auftretende Partikel mit näherungsweise konstanter Grösse und Position als Defekte erkannt und verworfen werden. Hierzu kann vorzugsweise eine dynamische Liste mit betroffenen Pixel und Objekten zur Filterung des Messresultate erstellt werden.

Alternativ und auch für die Laserbeugung geeignet kann durch kurzzeitiges Abstellen des Produktstroms (z.B. durch Stoppen einer Entnahmeschnecke) der Hintergrund ohne Produktstrom in regelmässigen Zeitabständen neu angelernt werden und zur fortlaufend angepassten Korrektur der Rohdaten eingesetzt werden.

Optional kann der Produktstrom zum Anlernen eines aktuellen Hintergrundes zur Korrektur von Laserbeugungsspektren periodisch abgeschaltet werden.

Die Erfindung betrifft weiterhin eine Vorrichtung zur Bestimmung einer Grössenverteilung von Partikeln, insbesondere zur Durchführung des oben beschriebenen erfindungsgemässen Verfahrens.

Die Vorrichtung umfasst

- eine Herstellungsvorrichtung zur Herstellung eines Partikel enthaltenden Produktstromes mittels eines Herstellungsverfahrens und/oder eine Bereitstellungsvorrichtung zur Bereitstellung eines Partikel enthaltenden Produktstromes, welcher mittels eines Herstellungsverfahrens hergestellt wurde,

- mindestens zwei Messeinrichtungen zur Erfassung zumindest eines Teils der Partikel und,

- eine Recheneinheit zur Ermittlung zumindest einer Eigenschaft des Teils der Partikel anhand der von den optischen Messeinrichtungen ermittelten Messdaten.

Das Herstellungsverfahren ist ausgewählt aus der Gruppe bestehend aus Zerkleinerungs-, Reinigungs-, Trenn-, Misch- und Agglomerationsverfahren. Mindestens zwei der Messeinrichtungen sind als zwei verschiedene optische Messeinrichtungen zur optischen Erfassung des Teils der Partikel ausgebildet. Wenigstens eine rechnerisch ermittelte Eigenschaft des Teils der Partikel ist die Grössenverteilung des Teils der Partikel.

Erfindungsgemäss ist mindestens eine optische Messeinrichtung zur Erfassung eines Beugungsmusters der Partikel ausgebildet. Aufgrund dieser Ausbildung können mit dieser Vorrichtung die Vorteile erzielt werden, die bereits oben im Zusammenhang mit dem erfindungsgemässen Verfahren beschrieben wurden.

Die Vorrichtung kann Entnahmemittel zur Entnahme einer Probe aus dem Produktstrom aufweisen. Alternativ oder zusätzlich kann die Vorrichtung Transportmittel zum Transport der Probe zu einem Messbereich aufweisen. Dabei sind die Messeinrichtungen derart ausgebildet und angeordnet, dass die Probe mittels der Messeinrichtungen im Messbereich optisch erfassbar ist.

Die Entnahmemittel können als Entnahmeschnecke ausgebildet sein. Mit Hilfe einer solchen Entnahmeschnecke kann die Probe einem Produktstrom, beispielsweise einem Schüttgutstrom, entnommen werden. Die Probenentnahme kann örtlich und bevorzugt kombiniert örtlich und zeitlich erfolgen. Bei der örtlichen Probenahme wird nur Produkt aus einem Teil des Produktstroms entnommen. Dies kann durch eine in das Rohr eingeschobene Entnahmeschnecke realisiert werden, wobei nur Produkt entnommen wird, dass auf die Entnahmeschnecke fällt. Die Entnahmeschnecke kann hierbei ortsfest oder vorzugsweise schwenkbar ausgeführt sein.

Zeitliche Probenahme bedeutet, dass das gesamte Produkt nicht kontinuierlich sondern nur kurzzeitig entnommen wird. Dieser Vorgang wird wiederholt. Wenn der Prozess kontinuierlich und ausreichend stabil läuft, sind die entnommenen Muster auch für Zeitpunkte vor und nach der Probenahme ausreichend repräsentativ.

Ein im Rahmen der vorliegenden Erfindung bevorzugter Probenehmer zur Entnahme einer Probe aus dem Produktstrom enthält einen Schneckenmantel, welcher zumindest teilweise in einer Strömungsleitung angeordnet oder anordenbar ist, in welcher der Produktstrom strömt. Bei der Strömungsleitung kann es sich etwa um eine Fallleitung handeln. Weiterhin umfasst der Probenehmer eine Entnahmeschnecke, welche zumindest teilweise im Schneckenmantel aufgenommen ist. Die Entnahmeschnecke dient der Entnahme der Probe.

Der Schneckenmantel und/oder die Entnahmeschnecke sind wahlweise in eine Aufnahmeposition oder in eine Bereitschaftsposition bringbar. Dabei sind in der Aufnahmeposition im Produktstrom enthaltene Partikel im Schneckenmantel aufnehmbar und damit mittels der Entnahmeschnecke aus dem Produktstrom entnehmbar. In der Bereitschaftsposition dagegen sind keine im Produktstrom enthaltenen Partikel im Schneckenmantel aufnehmbar. Durch Wahl der Aufnahmeposition oder der Bereitschaftsposition kann also eingestellt werden, ob Partikel mittels der Entnahmeschnecke entnehmbar sind oder nicht. Insbesondere kann die Entnahmeschnecke auch in der Bereitschaftsposition weiterhin rotieren, ohne dass weitere Partikel in den Schneckenmantel gelangen können. Die Entnahmeschnecke muss also zwischen aufeinander folgenden Probeentnahmen nicht angehalten werden.

In einigen Ausführungsformen können die Entnahmeschnecke und der Schneckenmantel bewegbar, insbesondere schwenkbar gelagert sein und in einer Bereitschaftsposition ausserhalb des Produktstroms anordenbar sein. In dieser Bereitschaftsposition kann die Entnahmeschnecke bereits vorhandenes Produkt fördern, nimmt aber kein neues Produkt auf. Zur Probenahme können dann Entnahmeschnecke und Schneckenmantel in den Produktstrom geschwenkt werden, bis die Schnecke gefüllt ist. Eine Verschlusshülse ist in dieser Ausführung nicht notwendig.

Bevorzugt umfasst der Probenehmer Verschlussmittel, mittels welcher der Schneckenmantel und/oder die Entnahmeschnecke wahlweise in eine Aufnahmeposition oder in eine Bereitschaftsposition bringbar ist. In der Aufnahmeposition können die Verschlussmittel den Schneckenmantel öffnen, so dass eine Aufnahmeposition entsteht. In der Bereitschaftsposition können die Verschlussmittel den Schneckenmantel verschliessen, so dass eine Bereitschaftsposition entsteht.

Bevorzugt ist der Schneckenmantel im Wesentlichen rinnenförmig ausgebildet ist, und die Verschlussmittel sind bevorzugt als Verschlusshülse ausgebildet. Weiterhin bevorzugt ist die Verschlusshülse um eine Achse relativ zum Schneckenmantel rotierbar ist, welche parallel zur Drehachse der Entnahmeschnecke verläuft oder mit ihr übereinstimmt. Durch Einstellung des relativen Winkels zwischen der Verschlusshülse und dem Schneckenmantel kann dann wahlweise die Aufnahmeposition oder die Bereitschaftsposition eingestellt werden. Diese Bauform ist besonders einfach.

Alternativ können auch bewegliche Leitbleche, Rohrweichen oder dergleichen zum wahlweisen Einstellen der Aufnahmeposition und der Bereitschaftsposition verwendet werden.

Die Vorrichtung kann ferner Mittel zum Vereinzeln und/oder Dispergieren der Probe enthalten. Hierdurch wird eine repräsentative Probenahme auch bei grosser Probenteilung und ein ständiger Zwangstransport des Produkts garantiert. Dies kann vorteilhaft sein, wenn eine der Messeinrichtungen nur einen Bruchteil (beispielsweise 1/10 bis 1/10000) des gesamten Produktstroms analysieren kann. Mit Hilfe einer Probenteilung kann die Produktmenge entsprechend zu reduzieren werden.

Weiterhin möglich sind mehrere Produktentnahmestellen, an denen die Probe entnommen werden kann. Die Anwendung der Vorrichtung kann auch ein Umschalten zwischen verschiedenen Produktentnahmestellen ermöglichen, z.B. zur Regelung der Walzenparallelität bei einem Walzenstuhl.

Bevorzugt ist mindestens eine optische Messeinrichtung zur Erfassung von Projektionsflächen der Partikel ausgebildet.

Ebenfalls bevorzugt sind mindestens zwei der Messeinrichtungen, insbesondere eine optische Messeinrichtung zur Erfassung eines Beugungsmusters der Partikel und eine weitere optische Messeinrichtung, räumlich nahe beieinander angeordnet. Dies erlaubt es einerseits, die Messung in zwei räumlich nach beieinander liegenden oder sogar im gleichen optischen Messbereich durchzuführen. Andererseits kann hierdurch eine kompakte Bauweise erzielt werden. Bevorzugt können die mindestens zwei Messeinrichtungen in einem gemeinsamen Gehäuse aufgenommen sein.

In einigen Weiterbildungen weist die Vorrichtung mindestens einen Steuerkreis und/oder Regelkreis auf, mittels dessen mindestens ein Prozessparameter des Herstellungsvorrichtung anhand der von der Recheneinheit bestimmten Eigenschaft, insbesondere anhand der Grössenverteilung des Teils der Partikel, steuerbar bzw. regelbar ist.

Vorzugsweise wird die Partikelflächenbelegung (also das durchschnittliche Verhältnis von Partikelfläche zu Messfläche im Messbereich) im Messbereich im Wesentlichen konstant gehalten, um mögliche Einflüsse auf das Messresultat zu vermeiden. Dies kann beispielsweise wie folgt erreicht werden: Die Projektionsflächen aller Partikel (d. h. die Partikelflächen) werden in jedem Bild gemessen und sind daher bekannt. Sie werden über mehrere Bilder gemittelt. Die Messfläche (d. h. die Bildgrösse) ist fix und ebenfalls bekannt. Die Vorrichtung berechnet daraus die jeweilige Partikelflächenbelegung und kann diese als Ist-Wert (z.B. als analogen Wert) einer Regelung zur Verfügung stellen. Die Dosiereinheit (z.B. die Schnecke) kann die Fördermenge je nach Abweichung vom Ist-Wert erhöhen oder erniedrigen. Dies kann durch Anpassung der Schneckendrehzahl oder durch Änderung deren Füllungsgrads gelöst werden. Der Füllungsgrads wiederum kann über den Takt der Zeitlichen Probenteilung unmittelbar gesteuert und/oder geregelt werden.

Vorzugsweise wird das Verhältnis im Bereich von 0,2 % bis 5 % konstant gehalten. Hierzu können Ist- und Sollwert der Partikelflächenbelegung als Eingangsgrössen einer Regelung der zeitlichen Probenteilung verwendet werden.

Es ist in weiterer Ausbildung möglich, dass die Vorrichtung noch weitere Messeinrichtungen zur Erfassung zumindest eines Teils der Partikel aufweist. Bei diesen weiteren Messeinrichtungen muss es sich nicht zwingend um optische Sensoren handeln; stattdessen kann die Vorrichtung auch mindestens einen induktiven, kapazitiven, Ultraschall-, Nahinfrarot- und/oder Farb-Sensor enthalten. Hiermit können beispielsweise die Form, der Formfaktor, die Farbe, ein Farbanteil und/oder die Geschwindigkeit des Teils der Partikel bestimmt werden.

Der Farb-Sensor kann als Farbbildsensor ausgebildet sein. Ein System und ein Verfahren zur Mahlgut-Charakterisierung mit einem Farbbildsensor sind beispielsweise in der internationalen Patentanmeldung PCT/EP2009/055877 beschrieben. Ein solcher Farbbildsensor kann die Verwendung von Farbinformation für die Charakterisierung der Partikel eines Mahlgutstroms ermöglichen, indem die Partikel mittels der von ihnen abgestrahlten elektromagnetischen Strahlung auf einen Farbbildsensor abgebildet werden, der die elektromagnetische Strahlung dann auf seinen Sensor-Bildelementen spektral selektiv erfasst.

Mindestens eine der optischen Messeinrichtungen kann mit einem Sichtfenster versehen sein, durch welches die Partikel in einem Messbereich erfasst werden können.

Die Sauberkeit des Sichtfensters ist für die Qualität der Messung entscheidend. Um Partikelanhaftungen an den Sichtfenstern zu minimieren, wird das Scheibenmaterial und/oder die Scheibenoberflächenstruktur bevorzugt so gewählt, dass die physikalischen und/oder chemischen Haftkräfte wie beispielsweise Van-der-Waals-Kräfte, Wasserstoffbrücken, Dipolkräfte und/oder Flüssigkeitsbrücken möglichst gering sind.

Bevorzugt kann das Sichtfenster elektrisch leitende Gläser oder transparente Kunststoffe enthalten oder daraus bestehen. Hierdurch können elektrostatische Partikelanhaftungen stark reduziert oder sogar vollständig vermieden werden. Hierzu können bevorzugt elektrisch leitend beschichtete Sichtfenster eingesetzt werden. Dabei können ein Glas oder ein Kunststoff auf der Innenseite eines Kanals beschichtet sein, in dem der Teil der Partikel geführt wird. Die Beschichtung kann beispielsweise einen Film aus Indiumzinnoxid, Siliciumoxid-basierten Materialien oder $TiO_2$ (vorzugsweise unterstöchiometrisch in O) enthalten oder daraus bestehen.

Demgemäss betrifft die Erfindung weiterhin die Verwendung eines zumindest teilweise elektrisch leitenden, insbesondere eines mit einer elektrisch leitenden Beschichtung versehenen, transparenten Materials als Sichtfenster zur Reduktion elektrostatischer Partikelanhaftungen am Sichtfenster. Insbesondere kann es sich um die Verwendung als Sichtfenster in einer optischen Messeinrichtung handeln. Das transparente Material kann etwa ein Glas oder ein transparenter Kunststoff enthalten oder daraus bestehen.

Zusätzlich können durch Heizen, Kühlen oder abwechselndem Heizen und Kühlen Materialeigenschaften der Anhaftungen geändert und somit die Verschmutzung minimiert werden. Durch Vibration des oder der Sichtfenster, beispielsweise durch ein Piezoelement, können zusätzlich oder alternativ Partikelhaftkräfte überwunden werden und somit eine höhere Sauberkeit des Sichtfensters erzielt werden.

Alternativ oder zusätzlich können beim erfindungsgemässen Verfahren die Partikelgeschwindigkeit für unterschiedliche Produkte so eingestellt werden, dass die Verschmutzung des Sichtfensters möglichst gering ist. Höhere Geschwindigkeiten verringern die strömungsmechanische Grenzschichtdicke an den Kanalinnenseiten der Sichtfenster und führen somit zu höheren Scherkräften und energiereicheren Kollisionen zwischen bewegten und anhaftenden Partikeln. Daraus ergibt sich mit steigender Strömungsgeschwindigkeit ein zunehmender Selbstreinigungseffekt. Für feinere Produkte wie beispielsweise Mehl und mittlere Strömungsgeschwindigkeiten von mehr als 10 m/s in Kombination mit elektrisch leitend beschichteten Sichtfenstern dominiert der Selbstreinigungseffekt und führt zu hinreichend sauberen Sichtfenstern.

Bei gröberen Partikeln wie beispielsweise Ganzkorngetreide hingegen können hohe Partikelgeschwindigkeiten nachteilig sein, da es durch die höheren Massenkräfte bei dem Stoss eines Partikels gegen das Sichtfenster im Vergleich zu feineren Partikeln zu festeren Materialanlagerungen am Sichtfenster kommen kann. Dieser Effekt tritt bei Getreideprodukten besonders bei fett-und/oder proteinreichen Partikeloberflächen auf und verschlechtert die optischen Eigenschaften der Sichtfenster. Zusätzlich fördern die höheren Massenkräfte den Verschleiss der Bauteile und Sichtfenster. Diese negativen Einflüsse können gegenüber dem vorteilhaften Selbstreinigungseffekt bei höheren Geschwindigkeiten überwiegen, so dass in einigen Ausführungsformen des Verfahrens geringere Geschwindigkeiten bevorzugt werden, insbesondere Geschwindigkeiten von weniger als 20 m/s, bevorzugt weniger als 15 m/s, besonders bevorzugt weniger als 10 m/s.

Alternativ oder zusätzlich kann auch durch die geometrische Beschaffenheit des Kanals, in dem der Teil der Partikel geführt wird, die Produktführung so eingestellt werden, dass die Partikel nicht oder nur selten mit den Sichtfenstern in Kontakt kommen und somit Partikelanhaftungen vermieden werden. Hierzu kann beispielsweise eine partikelfreie Grenzschicht und Minimierung der Turbulenz in der Grenzschicht durch eine sprunghafte Kanalaufweitung mit Spülluft erzeugt werden. Hierbei kann die Spülluft oberhalb und/oder unterhalb einer Stufe eingeblasen werden, um die Sichtfenster mit sauberer (d. h. partikelfreier) Spülluft abzuschirmen und um Rezirkulationen zu vermeiden.

Alternativ oder zusätzlich kann eine partikelfreie Grenzschicht durch eine kontinuierliche Kanalaufweitung mit porösen Seitenwänden und homogener Luftzugabe durch die porösen Wände erzeugt werden.

Ebenfalls alternativ oder zusätzlich kann bei der optischen Messeinrichtung zur Erfassung eines Beugungsmusters eine Bohrung angeordnet sein, die insbesondere dem Durchmesser des Laserstrahls entsprechen kann. Das Sichtfenster kann dabei zurückgesetzt sein. Ein insbesondere ringförmiger Spülluftspalt kann im Bereich des Sichtfensters angeordnet sein, um Anhaftungen der Partikel an den Sichtfenstern zu verhindern.

Das Signal der Messeinrichtungen kann dazu verwendet werden, die Produktqualität zu optimieren und/oder konstant zu halten. Hierzu kann die Messeinrichtung in Kombination mit einer oder mehreren Zerkleinerungseinheiten wie beispielsweise einer Mühle eingesetzt werden, beispielsweise einer Walzen-, Stift-, Prall-oder Hammermühle. Die Mahlwirkung eines Walzenstuhls kann beispielsweise durch Grösse und Parallelität des Spalts zwischen dem Walzenpaar, die Walzendrehzahl oder das Walzendrehzahlverhältnis im Betrieb so angepasst werden, dass die Partikelgrössenverteilung und/oder andere Partikeleigenschaften zuvor definierten Sollwerten entsprechen. Zur Überprüfung der Walzenparallelität ist es möglich, mit einer beweglichen oder mindestens zwei ortsfesten Entnahmestellen ein oder mehrere Teilströme an verschiedenen Walzenpositionen abzuzweigen und diese parallel mit mehreren Messsystemen oder vorzugsweise sequenziell mit einem Messsystem auszuwerten.

Mittels der Messeinrichtungen können optische, mechanische und/oder aerodynamische Reinigungs- oder Trennprozesse, wie beispielsweise Sichten, überwachen, gesteuert und/oder geregelt werden. Eine gewünschte Partikelgrössenverteilung kann hierbei durch Einstellen Maschinenparametern wie Geschwindigkeit, Drehzahl, Druck, Volumenstrom, Maschinengeometrie und Geometrie der Trennvorrichtungen erreicht werden.

Alternativ oder zusätzlich können die Vorrichtung oder das Verfahren verwendet werden, um Eigenschaften der Eingangsprodukte und/oder des Endprodukts bei Mischvorgängen zu bestimmen oder um einen Mischvorgang geeignet zu steuern und/oder zu regeln. In Getreidemühlen können beispielsweise auf diese Art spezifizierte Endproduktqualitäten von Mehl, Griess, insbesondere Durumgriess oder Maisgriess, oder Kleie genauer erreicht werden. Weiterhin können mit Hilfe des erfindungsgemässen Verfahrens und/oder der erfindungsgemässen Vorrichtung bei Mischverfahren die Mischverhältnisse und/oder Maschinenparameter überwacht, gesteuert und/oder geregelt werden.

In Agglomerationsprozessen, wie beispielsweise beim Pelletieren und/oder Pressagglomerieren, beim Agglomerieren in fluidisierten Schichten und/oder durch Flockung, können die erfindungsgemässe Vorrichtung oder das erfindungsgemässe Verfahren dazu eingesetzt werden, die gewünschte mittlere Agglomeratgrösse oder Agglomeratgrössenverteilung und/oder andere Agglomerateigenschaften zu erzielen. Hierzu können im Betrieb unter anderem die

**EP 2 322 911 A1**

Produktverweilzeit, Prozessbedingungen wie Temperatur, Feuchte, Strömungsgeschwindigkeiten und/oder weitere Maschinen- oder Prozessparameter gesteuert, geregelt und/oder optimiert werden.

Durch Einsatz eines Farbsensors bei der Konturerfassung können zusätzlich zur Partikelgrösse die mittlere Farbe oder Farbanteile von Teilbereichen des Partikels erfasst werden. Vorzugsweise werden zusätzlich zur Farbe die Partikelform und/oder Formfaktoren bestimmt. Die Farbinformation kann dazu verwendet werden, Aussagen über die stoffliche Zusammensetzung der Partikel zu machen. Bei Getreidekörnern können hierdurch beispielsweise Fremdkörner, Bruchkörner, Verunreinigungen wie Sand und Steine oder von Schädlingen oder Krankheitserregern befallene Körner identifiziert werden. Bei Getreidezwischen- und Getreideendprodukten können verschiedene Kornbestandteile der Partikel voneinander unterschieden werden. Im Fall von Weizen kann mit Hilfe der Farbinformation der weissliche Mehlkörper, die bräunlichen Schalenteile und der eher gelbliche Keimling voneinander unterschieden werden. Ebenfalls können Partikel als Mischteile identifiziert werden, wobei mit dem Verfahren die einzelnen Teilbereiche eines Partikels anteilsmässig erfasst und beschrieben werden können. Dieses Vorgehen ist im Besonderen bei Prozessen angedacht, bei denen eine bezüglich Inhaltsstoffe selektive Vermahlung und anschliessende Trennung der Inhaltsstoffe notwendig ist. Weitere Vorteile, die sich aus der Verwendung eines Farbbildsensors ergeben, sind in der internationalen Patentanmeldung PCT/EP2009/055877 beschrieben.

In Anlagen oder Prozessen mit mindestens zwei Stellgrössen können ein oder mehrere Messeinrichtungen in Kombination mit einem Datenspeicher dazu eingesetzt werden, Betriebszustände einer Anlage bzw. eines Prozesses zumindest teilweise zu beschreiben und diese Zustände beispielsweise als gut oder schlecht zu definieren. Hierdurch entstehen Erfahrungswerte, die ein adaptives System zur Überwachung, Steuerung oder Regelung einer Anlage bzw. eines Prozesses ermöglichen. Vorzugsweise werden basierend auf den Messwerten Zustandsbereiche der Anlagen bzw. Prozesse mathematisch beschrieben und interpoliert und geregelt und/oder optimiert.

Zur Optimierung von Prozessen mit Regelsystemen kann auch eine umfassendere Detektion von Partikeleigenschaften und/oder Maschinenzuständen und/oder Anlagenzuständen durch Kombination des Messsystems mit weiteren Messeinrichtungen erzielt werden, wie beispielsweise durch Ergänzung von induktiven, kapazitiven, Ultraschall-, Nahinfrarot- oder Farb-Sensoren.

Die Vorrichtung kann zur Regelung von Prozessen eingesetzt werden, bei denen Ist- und Sollwert der Regelung als Rohdaten der Laserbeugung oder als Laserbeugungsspektrum vorliegen und somit nicht notwendigerweise aus den Rohdaten der Laserbeugung Partikelgrössenverteilungen rekonstruiert werden müssen. Das Verfahren verringert den Rechenaufwand und optimiert das Signal-Rausch-Verhalten des Messsystems.

Möglich ist eine Regelung für feines Produkt, z.B. für Mehle mit feinen Partikeln, bei der direkt im Beugungsspektrum anstelle einer Regelung bezüglich Partikelmasse oder Projektionsfläche vorzusehen. Dieses Verfahren wird bevorzugt dann verwendet, wenn zumindest der Grossteil der Partikel in den Messbereich der Laserbeugung fällt. Dies ist nur für feine Produkte (z.B. mit einer maximalen Grösse von 300 $\mu$m) der Fall. Für Mehl (typischerweise mit Grössen von weniger als 150 $\mu$m) kann dieses Verfahren angewendet werden.

Die Erfindung wird nachfolgend in einem Ausführungsbeispiel anhand von Zeichnungen beschrieben. Dabei zeigen

Fig. 1: eine perspektivische Ansicht einer erfindungsgemässen Vorrichtung;

Fig. 2: eine seitliche Schnittansicht eines zwei optische Sensoren enthaltenden Messapparatur der Vorrichtung gemäss Figur 1;

Fig. 3: einen Probennehmer der Vorrichtung gemäss Figuren 1 und 2;

Fig. 4a und 4b: einen Probenehmer der Vorrichtung gemäss Figur 1 mit einem Probenehmer und einer Verschlusshülse (a) in einer Aufnahmeposition und (b) in einer Bereitschaftsposition;

Fig. 5: eine Veranschaulichung der Aufenthaltswahrscheinlichkeit eines Partikels;

Fig. 6: eine Skizze zur Erläuterung einer Korrektur von Geschwindigkeitseffekten;

Fig. 7a und 7b: schematische Darstellung von Mitteln zum Verhindern eines Kontaktes eines Produktes mit einem Sichtfenster;

Fig. 8a und 8b: weitere Mittel zum Verhindern eines Kontaktes eines Produktes mit einem Sichtfenster.

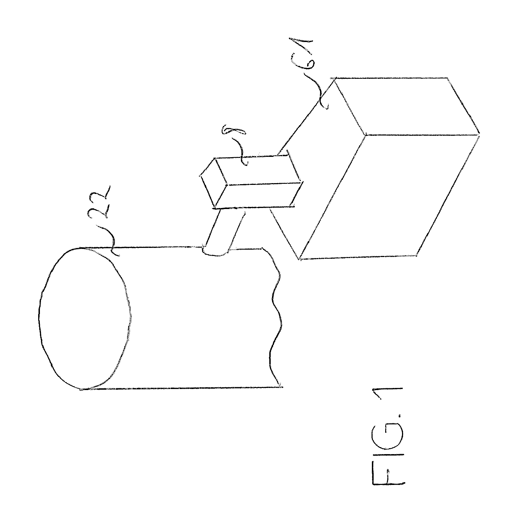

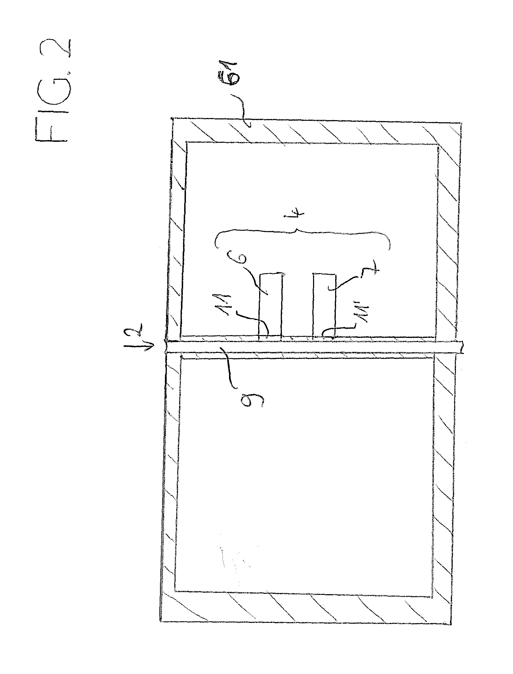

Gemäss Figur 1 wird ein Partikelstrom in einer Fallleitung 22 vertikal nach unten geführt. Der Partikelstrom enthält Partikel, wie sie in einem Vermahlungsprozess auftreten können, beispielsweise nach einem Zerkleinerungs-, Reinigungs- oder Trennvorgang in einer Getreidemühle. Mittels Entnahmemitteln, die als Probenehmer 1 ausgebildet sind, wird an einer Messstelle ein Teilstrom der Partikel entnommen und horizontal einem Vereinzler und Dispergierer 8 zugeführt. Die Probenentnahme ist unten im Zusammenhang mit Figur 2 genauer erläutert. Der Vereinzler und Dispergierer 8 ist an sich bekannt. Er kann beispielsweise als Prallplatte (etwa wie in WO 2006/000112 beschrieben), Gebläse oder Vibrator ausgebildet sein oder Wurfschaufeln enthalten.

Gemäss Figur 2 wird der Luftstrom 10 mit den darin aufgenommenen Partikeln dann in einem Kanal 9 beruhigt und zwei optischen Sensoren 6, 7 einer optischen Messapparatur 4 präsentiert, die innerhalb eines Gehäuses 61 angeordnet sind. Die Sensoren 6, 7 bilden zwei verschiedene optische Messeinrichtungen. Dabei ist der optische Sensor 6 ist zur Erfassung eines Beugungsmusters der Partikel ausgebildet, während der optische Sensor 7 ist zur Erfassung von Projektionsflächen der Partikel ausgebildet. Im gezeigten Ausführungsbeispiel ist der optische Sensor 7 stromabwärts vom optischen Sensor 6 angeordnet; diese Reihenfolge ist jedoch für die Erfindung nicht wesenlich. Zwei Sichtfenster 11,11' des Kanals 9 ermöglicht die Messung der Partikel im Luftstrom 10. Die optischen Achsen der Sensoren können senkrecht zur Strömungsrichtung angeordnet sein. Weiterhin ist auch eine Abweichung von bis zu 15° von der optisch senkrechten Ausrichtung eines oder beider Sensoren denkbar, um Reflektionen zu vermeiden. Eine konkrete Kombination zweier in einem Gehäuse aufgenommener Sensoren, die in diesem Ausführungsbeispiel eingesetzt werden können, ist beispielsweise in der deutschen Patentanmeldung DE 102009014080 beschreiben.

Partikel, die die Sensoren 6, 7 passiert haben, können mit einer optionalen Produktrückführleitung in den Hauptstrom zurückgeführt werden.

Durch Vereinigung der Messdaten der beiden optischen Sensoren 6, 7 können Partikelgrössenverteilungen mit einer Bandbreite von bis zu vier Partikelgrössenordnungen erfasst werden. damit die Vorteile der Laserbeugung für kleine Partikel und die der Partikelkonturerfassung für grosse Partikel in einem Gehäuse vereinigt werden.

Vorzugsweise wird die Partikelflächenbelegung (also das durchschnittliche Verhältnis von Partikelfläche zu Messfläche im Messbereich) im Messbereich konstant gehalten, um mögliche Einflüsse auf das Messresultat zu vermeiden. Vorzugsweise wird das Verhältnis im Bereich von 0,2 % bis 5 % konstant gehalten. Hierzu können Ist- und Sollwert der Partikelflächenbelegung als Eingangsgrössen einer Regelung der zeitlichen Probenteilung verwendet werden.

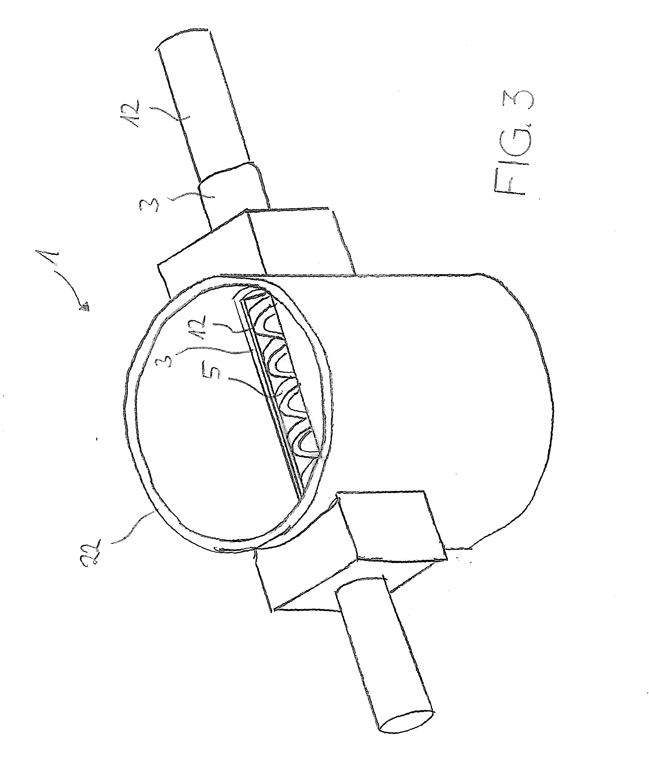

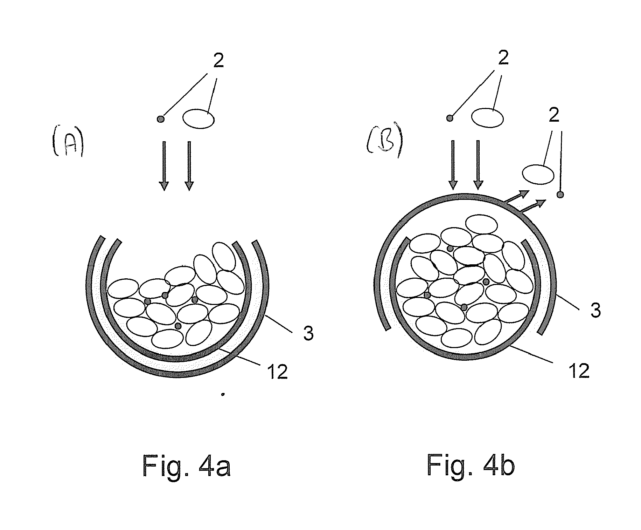

Figur 3 zeigt detailliert den Probenehmer 1 zur Entnahme eines Teilstroms aus dem Hauptstrom, welcher durch die Fallleitung 22 strömt. Der Probenehmer 1 enthält eine horizontal angeordnete Entnahmeschnecke 5. Die Unterseite der Entnahmeschnecke 5 ist in einem rinnenförmigen Schneckenmantel 12 aufgenommen (vgl. auch Figuren 4a und 4b unten). Die Entnahme mittels der Entnahmeschnecke 5 gewährleistet die Repräsentativität der entnommenen Probe.

Um ein Überlaufen des Produkts aus dem Schneckenmantel 12 und damit eine Produktentmischung auch bei kleinem Schneckenaustrag zu vermeiden, kann gemäss Figuren 4a und 4b die Öffnung des Schneckenmantels 12 beispielsweise durch eine drehbare Verschlusshülse 3 mittels Steuerung oder Regelung nur kurzzeitig geöffnet werden (Figur 4a), so dass eine Aufnahmeposition (A) erreicht ist, und wieder verschlossen werden (Figur 4b). Die Verschlusshülse ist dabei um eine Achse drehbar, welche parallel zur Drehachse der Entnahmeschnecke 5 verläuft. In der Bereitschaftsposition (B) gemäss Figur 4b können Partikel 2 nicht in den Bereich zwischen Schneckenmantel 12 und Verschlusshülse 3 eindringen. Die Verschlusshülse 3 kann mittels eines hier nicht dargestellten Antriebs 31 angetrieben werden. Alternativ können auch bewegliche Leitbleche, Rohrweichen usw. zum Öffnen und Schliessen der Öffnung des Schneckenmantels 12 verwendet werden.

Durch derartige Vorrichtungen kann in flexiblen zeitlichen Intervallen ein örtlich ausreichend repräsentativer Teilstrom in dem Schneckenmantel 12 entnommen werden und mit einer konstanten und im Vergleich zum Hauptstrom kleinen Förderrate der Messapparatur 4 mit den optischen Sensoren 6, 7 zugeführt werden. Die Entnahmeschnecke 5 ermöglicht die örtliche Probeteilung, das Verschliessen der Verschlusshülse 3 der Entnahmeschnecke 5 ermöglicht die Zeitverteilung. Durch die Intervalle der zeitlichen Probeteilung kann zusätzlich das Teilungsverhältnis der Probename flexibel den Prozessbedingungen angepasst werden. Durch Kombination der Probeteilungsmethoden kann eine grosses Probenteilungsverhältnis bis 1:10000 ermöglicht werden. Dieses ist für rein örtliche Probenteilung nicht möglich, da hierbei Entmischungen zu nicht repräsentativen Proben führen. Gleichzeitig sind die entnommenen Produktmengen kleiner als bei einer reinen zeitlichen Probenteilung und werden zusätzlich kontinuierlich ausgetragen. Alternativ zu dem Verschluss der Schnecke könnte diese auch aus dem Produktstrom herausgeschwenkt werden. Dazu können Entnahmeschnecke und Schneckenmantel bewegbar, insbesondere schwenkbar gelagert sein und in einer Bereitschaftsposition ausserhalb des Produktstroms anordenbar sein. In dieser Bereitschaftsposition kann die Entnahmeschnecke bereits vorhandenes Produkt fördern, nimmt aber kein neues Produkt auf. Zur Probenahme können dann Entnahmeschnecke und Schneckenmantel in den Produktstrom geschwenkt werden, bis die Schnecke gefüllt ist. Eine Verschlusshülse ist in dieser Ausführung nicht notwendig. Schwankungen von Prozessmassenströmen können beispielsweise durch eine Steuerung oder Regelung kompensiert werden.

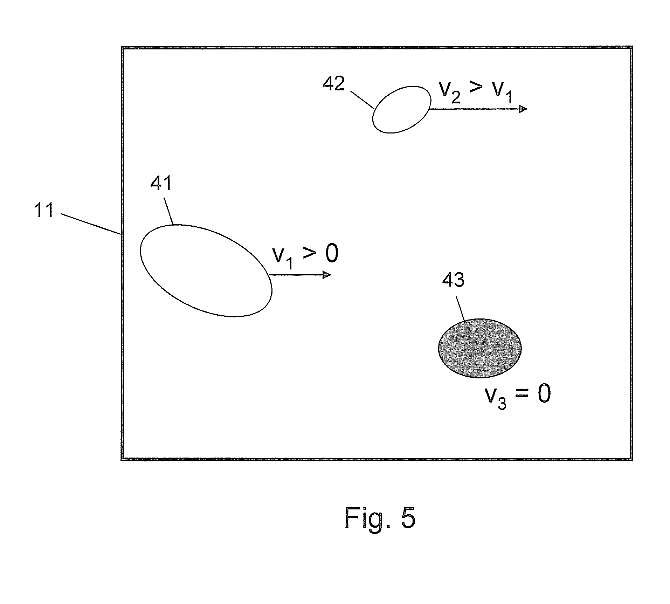

Gemäss Figur 5 haben in einer beschleunigten Strömung z.B. grössere Partikel 41 aufgrund ihrer meist höheren Masse geringere Geschwindigkeiten als kleinere Partikel 42. Da die Partikelgeschwindigkeit die Verweilzeit der Partikel 41, 42, 43 im durch das Sichtfenster 11 erfassbaren Messbereich und damit unmittelbar die Detektionswahrscheinlichkeit des Partikels bestimmt, muss die optisch detektierte Partikelgrössenverteilung diesbezüglich korrigiert werden. Die relativen oder absoluten Geschwindigkeiten müssen dabei für die individuellen Partikel oder zumindest gemittelt für jede relevante Partikelgrössenklasse bekannt sein. Die Gewichtung jeder Partikelgrössenklasse ergibt sich dann als Funktion aus Partikelgeschwindigkeit und Partikelgrösse (z.B. Projektionsfläche, Durchmesser oder geschätztes Volumen). Hierdurch kann die Geschwindigkeitsverteilung grosser Partikel unmittelbar gemessen werden. Der durch Laserbeugung gemessene Feinanteil der Verteilung hat aufgrund der kleineren Partikeldimensionen und Massen nahezu konstante Geschwindigkeit. Letztere kann durch Extrapolation aus der Geschwindigkeitsmessung mit Partikelkonturverarbeitung bestimmt werden.

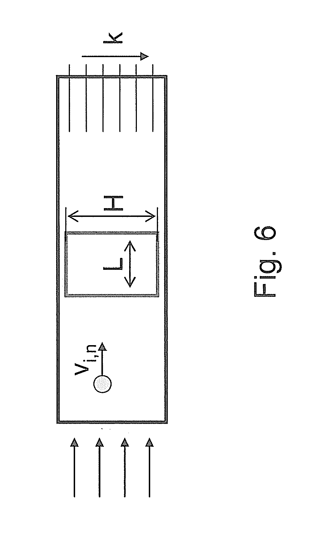

Figur 6 zeigt skizzenhaft einen Produktkanal, der teilweise oder vollständig durch das Kamerasystem erfasst wird. Die Detektionswahrscheinlichkeit eines Partikels n hängt hierbei sowohl von der Bildhöhe H, Bildlänge B und Bildrate f des hier nicht erkennbaren optischen Sensors als auch von Partikelgeschwindigkeit ab.

Die Bildgeschwindigkeit $V_B$ ist als die Geschwindigkeit definiert, mit der jeder Partikel, der das Detektionsvolumen in Hauptströmungsrichtung durchquert, genau auf einem Bild einer Messserie erfasst wird:

$$v_B = f * L \tag{1}$$

Beispielsweise ergibt sich für L = 15 mm und f = 50 Hz der Wert $V_B$ = 0.75 m/s. Schnelle Partikel ($v_{i,n} > V_B$) werden mit einer Detektionswahrscheinlichkeit $P_m < 100\%$ gemessen, dies entspricht einer zeitlichen Probenteilung mit:

$$P_m = v_B / v_{i,n} \tag{2}$$

Der Index i bezeichnet hierbei die Partikelgrössenklasse des Partikel n. Langsame Partikel ($v_{i,n} < v_B$) werden im statistischen Mittel in $1/P_m > 1$ Bildern detektiert. Nur die jeweils erste Messung verbessert hierbei die Partikelgrössenstatistik, deshalb sollte die Partikelgeschwindigkeit mindestens so hoch wie die Bildgeschwindigkeit gewählt werden.

Gleichung (2) zeigt, dass $P_m$ von der individuellen Geschwindigkeit des Partikels n abhängt. Dies muss bei der Bestimmung der Partikelmassen- oder Flächenverteilung berücksichtigt werden. Von Interesse ist nicht primär die Partikelgrössenverteilung pro Bild, sondern die Massenstromanteile der einzelnen Partikelgrössenklassen. Folglich ist das Produkt aus Partikelprojektionsfläche beziehungsweise Partikelmasse und Geschwindigkeit Grundlage für die Partikelgrössenstatistik. Unbewegte Partikel werden beispielsweise in jedem Bild detektiert aber leisten keinen Beitrag zum Massenstrom und werden daher mit der Geschwindigkeit Null gewichtet und in der Bilanz ignoriert.

Wenn in einer beliebigen Anzahl Bilder insgesamt in einer Partikelgrössenklasse i $n_{tot,i}$ Partikel der Projektionsfläche $a_{i,n}$ und Geschwindigkeit $v_{i,n}$ detektiert wurden, so ist die geschwindigkeitskorrigierte Gesamtprojektionsfläche der Partikelklasse i:

$$a_{tot,i} = \frac{1}{v_B} \sum_{n=1}^{n_{tot,i}} v_{i,n} a_{i,n} \tag{3}$$

Der korrigierte Projektionsflächenanteil $\alpha_i$ der Partikelgrössenklasse i ist dann:

$$\alpha_i = \frac{a_{tot,i}}{\sum_{i=1}^{i_{max}} a_{tot,i}} \tag{4}$$

Um auch ein Strömungsprofil quer zur Strömungsrichtung berücksichtigen und geeignet korrigieren zu können wird Gleichung 3 und 4 vorzugsweise nicht auf die gesamte Kanalbreite sondern auf einen Breitenabschnitt k (Figur 6, Diskretisierung quer zur Hauptströmungsrichtung) bezogen sein. Hier gilt analog zu der bisherigen Betrachtung:

$$\alpha_i = \frac{\sum_{k=1}^{k_{max}} a_{tot,i,k}}{\sum_{i=1}^{i_{max}} \sum_{k=1}^{k_{max}} a_{tot,i,k}} \quad \text{mit} \quad a_{tot,i,k} = \frac{1}{v_B} \sum_{n=1}^{n_{tot,i}} v_{i,k,n} a_{i,k,n} \qquad (5)$$

Die Sauberkeit des Sichtfensters 11 ist für die Qualität der Messung entscheidend. Um Partikelanhaftungen an den Sichtfenstern 11 zu minimieren, wird das Scheibenmaterial und/oder die Scheibenoberflächenstruktur so gewählt, dass die physikalischen und/oder chemischen Haftkräfte wie beispielsweise Van-der-Waals-Kräfte, Wasserstoffbrücken, Dipolkräfte und/oder Flüssigkeitsbrücken minimal sind. Besondere Bedeutung kommt auch den elektrostatischen Kräften zu, die durch die häufig auftretende elektrostatische Aufladung bei bewegten Schüttgütern mit Wandkontakt verstärkt werden. Elektrostatische Partikelanhaftungen können durch Sichtfenster aus elektrisch leitenden Gläsern oder transparenten Kunststoffen stark reduziert oder sogar vollständig vermieden werden. Hierzu werden bevorzugt elektrisch leitend beschichtete Sichtfenster eingesetzt, bei denen das Glas oder der Kunststoff auf der Kanalinnenseite beispielsweise mit einem Film aus Indiumzinnoxid beschichtet ist. Alternative Beschichtungen können unter anderem auch Siliciumoxid-basierten Materialien oder $TiO_2$ (vorzugsweise unterstöchiometrisch in O) sein. Zusätzlich können durch Heizen, Kühlen oder abwechselndem Heizen und Kühlen Materialeigenschaften der Anhaftungen geändert und somit die Verschmutzung minimiert werden. Durch Vibration der Sichtfenster, beispielsweise durch ein Piezoelement, können zusätzlich oder alternativ Partikelhaftkräfte überwunden werden und somit eine höhere Sauberkeit des Sichtfensters erzielt werden.

Zusätzlich wird auch die Partikelgeschwindigkeit für unterschiedliche Produkte so optimiert, dass die Sichtfensterverschmutzung möglichst gering ist. Höhere Geschwindigkeiten verringern die strömungsmechanische Grenzschichtdicke an den Kanalinnenseiten der Sichtfenster und führen somit zu höheren Scherkräften und energiereicheren Kollisionen zwischen bewegten und anhaftenden Partikeln. Daraus ergibt sich mit steigender Strömungsgeschwindigkeit ein zunehmender Selbstreinigungseffekt. Für feinere Produkte wie beispielsweise Mehl und mittlere Strömungsgeschwindigkeiten von mehr als 10 m/s in Kombination mit elektrisch leitend beschichteten Sichtfenstern dominiert der Selbstreinigungseffekt und führt zu hinreichend sauberen Sichtfenstern.

Bei gröberen Partikeln wie beispielsweise Ganzkorngetreide hingegen können hohe Partikelgeschwindigkeiten nachteilig sein, da es durch die höheren Massenkräfte bei dem Stoss eines Partikels gegen das Sichtfenster im Vergleich zu feinerem Produkt zu festeren Materialanlagerungen an den Sichtfenstern kommen kann. Dieser Effekt tritt bei Getreideprodukten besonders bei fett-und/oder proteinreichen Partikeloberflächen auf und verschlechtert die optischen Eigenschaften der Sichtfenster. Zusätzlich fördern die höheren Massenkräfte den Verschleiss der Bauteile und Sichtfenster. Diese negativen Einflüsse können gegenüber dem vorteilhaften Selbstreinigungseffekt bei höheren Geschwindigkeiten überwiegen, so dass geringere Geschwindigkeiten (< 15 m/s) bevorzugt werden. Es kann auch durch die geometrische Beschaffenheit des Strömungskanals die Produktführung so optimiert werden, dass die Partikel nicht oder nur selten mit den Sichtfernstern in Kontakt kommen und somit Partikelanhaftungen vermieden werden.

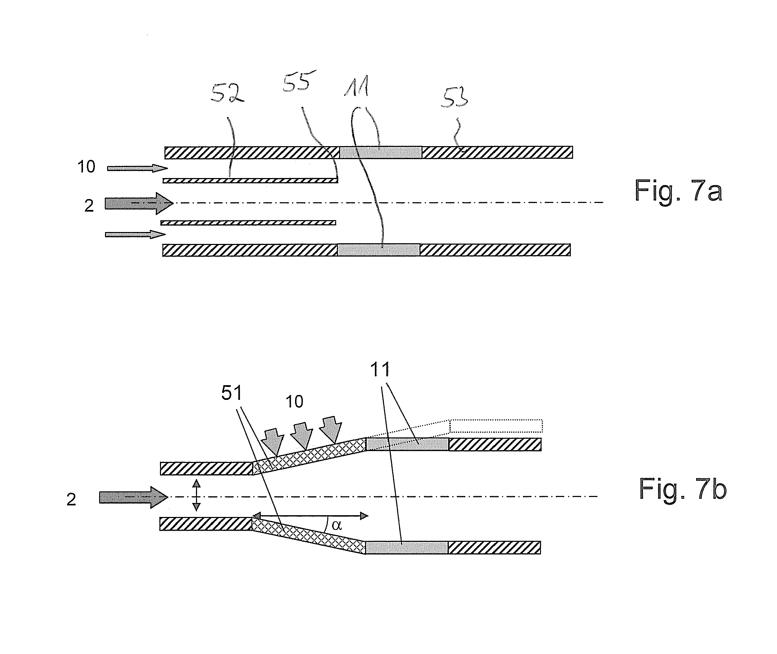

Hierzu können beispielsweise gemäss Figur 7a eine partikelfreie Grenzschicht und eine Minimierung der Turbulenz in der Grenzschicht durch eine sprunghafte Aufweitung eines Kanals mit Spülluft erzeugt werden. Zu diesem Zweck wird der Produktstrom 2 durch einen Innenkanal 52 geleitet, welcher im Innenraum eines aussen angeordneten Aussenkanals 53 mit grösserer Kanalhöhe endet. Der Produktstrom 2 kann an diesem Ende 55 aus dem Innenkanal 52 austreten. Die Wand des Aussenkanals 53 enthält zwei Sichtfenster 11, welche im Bereich des Endes 55 des Innenkanals 52 angeordnet sind. Zwischen dem Innenkanal 52 und dem Aussenkanal 53 strömt Spülluft 10, welche den Produktstrom 2 von den Sichtfenstern 11 fernhält und hierdurch deren Verschmutzung verhindert.

Alternativ kann gemäss Figur 7b eine partikelfreie Grenzschicht durch eine kontinuierliche Aufweitung des Kanals mit porösen Seitenwänden 51 und homogener Luftzugabe durch die porösen Seitenwände 51 erzeugt werden. Der Kanal ist in dem gezeigten Ausführungsbeispiel unter einem Winkel $\alpha$ von 18° aufgeweitet. Es sind jedoch natürlich auch andere Winkel denkbar, vorzugsweise zwischen 6° und 30°.

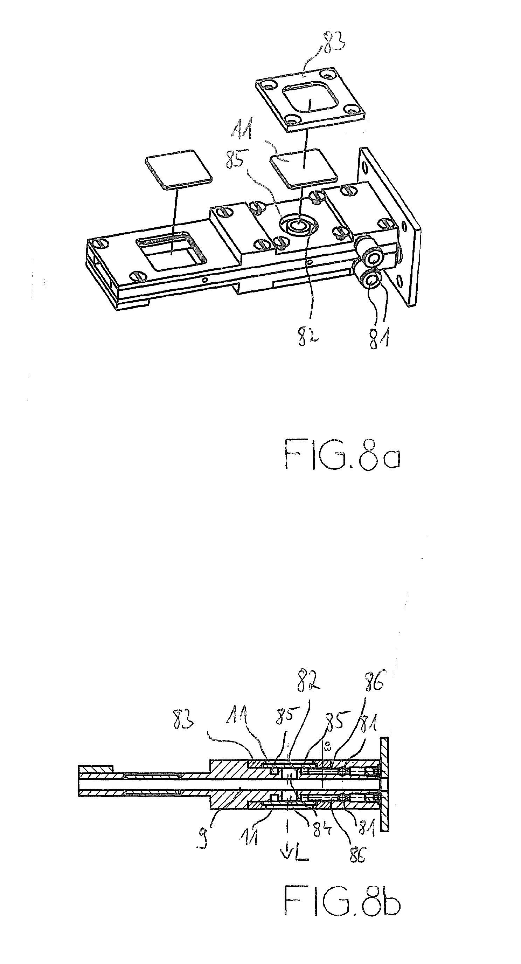

In einer weiteren, in den Figuren 8a und 8b dargestellten Variante kann eine Bohrung entsprechend dem Durchmesser eines Laserstrahles mit zurückgesetztem Sichtfenster 11 und einem ringförmigen Spülluftspalt 85 im Bereich des Sichtfensters 11 vorhanden sein. Gemäss der perspektivischen Explosionsdarstellung in Figur 8a wird Spülluft durch Lufteinlässe 81 in Luftkanäle 86 eingeleitet und tritt an Luftauslässen 82 in den ringförmigen Spülluftspalt 85 aus. Von dort strömt die Spülluft über Bohrungen 84 radial in den Kanal 9 (vgl. Figur 8b). An zwei gegenüberliegenden Seiten des Kanals 9 ist jeweils ein Sichtfenster 11 angeordnet, von denen in Figur 8a nur eines erkennbar ist. Dieses Sichtfenster 11 ist mittels eines Deckels 83 befestigt.

Gemäss der seitlichen Schnittansicht in Figur 8b wird ein Laserstrahl L durch die beiden gegenüberliegenden Sichtfenster 11, die Bohrungen 84 und den Kanal 9 sowie den darin geführten Produktstrom geleitet. Aufgrund der durch die Luftauslässe 82 und die Bohrungen 84 in Richtung des Kanals 9 strömenden Spülluft können die im Produktstrom enthaltenen Partikel nicht zu den Sichtfenstern 11 gelangen, was deren Verschmutzung entgegentritt.

**Patentansprüche**

1. Verfahren zur Bestimmung einer Grössenverteilung von Partikeln, **gekennzeichnet durch** die folgenden Schritte:

   a) Herstellung eines Partikel enthaltenden Produktstromes mittels eines Herstellungsverfahrens oder Bereitstellung eines Partikel enthaltenden Produktstromes, welcher mittels eines Herstellungsverfahrens hergestellt wurde, wobei das Herstellungsverfahren ausgewählt ist aus der Gruppe bestehend aus Zerkleinerungs-, Reinigungs-, Trenn-, Misch- und Agglomerationsverfahren oder beliebigen Kombinationen hiervon,
   b) Erzeugung von Messdaten **durch** Erfassung zumindest eines Teils der Partikel, wobei die Messdaten wenigstens **durch** optische Erfassung des Teils der Partikel mittels mindestens zweier verschiedener optischer Messverfahren erzeugt werden,
   c) Bestimmung zumindest einer Eigenschaft des Teils der Partikel anhand der in Schritt b) optisch erfassten Messdaten, wobei wenigstens eine Eigenschaft die Grössenverteilung des Teils der Partikel ist,

   **dadurch gekennzeichnet, dass** mindestens ein optisches Messverfahren die Erfassung eines Beugungsmusters des Teils der Partikel umfasst.

2. Verfahren gemäss Anspruch 1, **dadurch gekennzeichnet, dass** aus dem in Schritt a) hergestellten oder bereitgestellten Produktstrom eine Partikel enthaltende Probe entnommen wird und in Schritt b) die Partikel in der Probe optisch erfasst werden.

3. Verfahren gemäss einem der vorhergehenden Ansprüche, **dadurch gekennzeichnet, dass** mindestens eines der Messverfahren in Schritt b) die Erfassung von Projektionsflächen der Partikel umfasst.

4. Verfahren gemäss einem der vorhergehenden Ansprüche, **dadurch gekennzeichnet, dass** die in Schritt c) bestimmten Eigenschaften die Form, den Formfaktor, die Farbe, einen Farbanteil und/oder die Geschwindigkeit des Teils der Partikel umfassen.

5. Verfahren gemäss einem der vorhergehenden Ansprüche, **dadurch gekennzeichnet, dass** das Herstellungsverfahren ein Zerkleinerungsverfahren, insbesondere Mahlverfahren ist.

6. Verfahren gemäss einem der vorhergehenden Ansprüche, **dadurch gekennzeichnet, dass** mindestens ein Prozessparameter des Herstellungsverfahrens anhand der in Schritt c) bestimmten Eigenschaft, insbesondere anhand der Grössenverteilung des Teils der Partikel, gesteuert und/oder geregelt wird.

7. Vorrichtung zur Bestimmung einer Grössenverteilung von Partikeln, insbesondere zur Durchführung eines Verfahrens gemäss einem der Anspruch 1 bis 6, umfassend

   - eine Herstellungsvorrichtung zur Herstellung eines Partikel enthaltenden Produktstromes mittels eines Herstellungsverfahrens und/oder eine Bereitstellungsvorrichtung zur Bereitstellung eines Partikel enthaltenden Produktstromes, welcher mittels eines Herstellungsverfahrens hergestellt wurde, wobei das Herstellungsverfahren ausgewählt ist aus der Gruppe bestehend aus Zerkleinerungs-, Reinigungs-, Trenn-, Misch- und Agglomerationsverfahren,
   - mindestens zwei Messeinrichtungen zur Erfassung zumindest eines Teils der Partikel, wobei mindestens zwei der Messeinrichtungen als zwei verschiedene optische Messeinrichtungen (6, 7) zur optischen Erfassung des Teils der Partikel ausgebildet sind,
   - eine Recheneinheit zur Ermittlung zumindest einer Eigenschaft des Teils der Partikel anhand der von den optischen Messeinrichtungen ermittelten Messdaten, wobei wenigstens eine Eigenschaft die Grössenverteilung des Teils der Partikel ist,

   **dadurch gekennzeichnet, dass** mindestens eine optische Messeinrichtung (6) zur Erfassung eines Beugungsmusters der Partikel ausgebildet ist.

8. Vorrichtung gemäss Anspruch 7, **dadurch gekennzeichnet, dass** die Vorrichtung Entnahmemittel zur Entnahme einer Probe aus dem Produktstrom und Transportmittel zum Transport der Probe zu einem Messbereich aufweist, wobei die Messeinrichtungen derart ausgebildet und angeordnet sind, dass die Probe mittels der Messeinrichtungen im Messbereich optisch erfassbar ist.

9. Vorrichtung gemäss einem der Ansprüche 7 und 8, **dadurch gekennzeichnet, dass** mindestens eine optische Messeinrichtung (7) zur Erfassung von Projektionsflächen der Partikel ausgebildet ist.

10. Vorrichtung gemäss einem der Ansprüche 7 bis 9, **dadurch gekennzeichnet, dass** mindestens eine der Messeinrichtungen als induktiver, kapazitiver, Ultraschall-, Nahinfrarot- und/oder Farb-Sensor ausgebildet ist.

11. Vorrichtung gemäss einem der Ansprüche 7 bis 10, **gekennzeichnet durch** mindestens einen Steuerkreis und/ oder Regelkreis, mittels dessen mindestens ein Prozessparameter des Herstellungsvorrichtung anhand der von der Recheneinheit bestimmten Eigenschaft, insbesondere anhand der Grössenverteilung des Teils der Partikel, gesteuert bzw. geregelt wird.

12. Probenehmer (1) zur Entnahme einer Probe aus einem in einer Strömungsleitung geführten Produktstrom, insbesondere in einem Verfahren gemäss einem der Ansprüche 2 bis 6 und/oder in einer Vorrichtung gemäss einem der Ansprüche 7 bis 11, enthaltend

   - einen Schneckenmantel (12), welcher zumindest teilweise in der Strömungsleitung angeordnet oder anordenbar ist,
   - eine zumindest teilweise im Schneckenmantel (12) aufgenommene Entnahmeschnecke (5) zur Entnahme der Probe,

   **dadurch gekennzeichnet, dass** der Schneckenmantel (12) und/oder die Entnahmeschnecke (5) wahlweise in eine Aufnahmeposition (A) oder in eine Bereitschaftsposition (B) bringbar sind, wobei

   - in der Aufnahmeposition (A) im Produktstrom enthaltene Partikel (2) im Schneckenmantel (12) aufnehmbar sind und
   - in der Bereitschaftsposition (B) keine im Produktstrom enthaltenen Partikel (2) im Schneckenmantel (12) aufnehmbar sind.

13. Probenehmer (1) gemäss Anspruch 12, **dadurch gekennzeichnet, dass** der Probenehmer (1) Verschlussmittel aufweist, mittels welcher der Schneckenmantel (12) und/oder die Entnahmeschnecke (12) wahlweise in die Aufnahmeposition (A) oder in die Bereitschaftsposition (B) bringbar sind.

14. Probenehmer (1) gemäss Anspruch 13, **dadurch gekennzeichnet, dass**

   - der Schneckenmantel (12) im Wesentlichen rinnenförmig ausgebildet ist,
   - die Verschlussmittel als Verschlusshülse (3) ausgebildet sind, welche relativ zum Schneckenmantel (12) um eine Achse rotierbar ist, welche parallel zur Drehachse der Entnahmeschnecke (5) verläuft oder mit ihr übereinstimmt.

15. Verwendung eines zumindest teilweise elektrisch leitenden, insbesondere eines mit einer elektrisch leitenden Beschichtung versehenen, transparenten Materials als Sichtfenster (11) zur Reduktion elektrostatischer Partikelanhaftungen am Sichtfenster (11), insbesondere in einer optischen Messeinrichtung (6, 7).

FIG. 1

FIG. 2

FIG. 3

Fig. 4a

Fig. 4b

Fig. 5

Fig. 6

EP 2 322 911 A1

52   55   11   53

10

2

Fig. 7a

11

51   10

2   α

Fig. 7b

FIG.8a

FIG.8b

22

**EUROPÄISCHER RECHERCHENBERICHT**

Europäisches
Patentamt

European
Patent Office

Office européen
des brevets

Nummer der Anmeldung

EP 09 17 5995

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | DE 198 02 141 C1 (RETSCH KURT GMBH & CO KG [DE]) 22. April 1999 (1999-04-22) * Ansprüche 1-12; Abbildungen 1-2 * * Spalte 1, Zeile 3 - Zeile 18 * * Spalte 2, Zeile 60 - Seite 3, Zeile 12 * * Spalte 3, Zeile 44 - Spalte 4, Zeile 16 * ----- | 1-11 | INV. G01N15/14 G01N1/08 |
| X | EP 1 464 949 A2 (J M CANTY INC [US]) 6. Oktober 2004 (2004-10-06) * Abbildungen 1-3 * * Absatz [0021] - Absatz [0023] * ----- | 1-11 | |
| A | DE 195 10 034 A1 (SYMPATEC GMBH [DE]) 26. September 1996 (1996-09-26) * Zusammenfassung; Abbildungen 1,7 * * Seite 1, Zeile 7 - Zeile 25 * * Seite 6, Zeile 9 - Zeile 28 * ----- | 1-11 | |
| A | WO 2006/116882 A1 (BUEHLER AG [CH]; PIERRI DARIO [CH]; LISNER JOCHEN [CH]; RUEEGG ANDRE []) 9. November 2006 (2006-11-09) * Zusammenfassung; Abbildungen 1-2 * * Seite 12, Absatz 2 - Seite 13, Absatz 2 * * Seite 15, Absatz 2 - letzter Absatz * ----- | 1-11 | RECHERCHIERTE SACHGEBIETE (IPC) G01N |
| X | FR 2 258 108 A5 (ABONNENC JEAN [FR]) 8. August 1975 (1975-08-08) * Abbildungen 1a-1n * * Seite 2, Zeile 2 - Zeile 40 * * Seite 6, Zeile 17 - Seite 7, Zeile 8 * ----- -/-- | 12-14 | |

~~Der vorliegende Recherchenbericht wurde für alle Patentan~~sprüche erstellt

| Recherchenort | Abschlußdatum der Recherche | Prüfer |
|---|---|---|
| Den Haag | 27. Oktober 2010 | Bockstahl, Frédéric |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

  ....................................................................

& : Mitglied der gleichen Patentfamilie, übereinstimmendes
   Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 09 17 5995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 628 208 A1 (TRIPETTE & RENAUD [FR]) 8. September 1989 (1989-09-08) * Zusammenfassung; Ansprüche 1-9; Abbildungen 1-3 * * Seite 2, Zeile 10 - Zeile 17 * * Seite 2, Zeile 32 - Seite 3, Zeile 17 * ----- | 12-14 | |
| X | FR 2 421 828 A1 (AGROMATIC AS [DK]) 2. November 1979 (1979-11-02) * Ansprüche 1-6; Abbildungen 1-2 * * Seite 3, Zeile 35 - Seite 4, Zeile 12 * * Seite 4, Zeile 34 - Seite 5, Zeile 12 * ----- | 12-14 | |
| X | CA 2 417 333 A1 (RUBIN KENNETH W [CA]) 28. Juli 2004 (2004-07-28) * Zusammenfassung; Abbildungen 1-2 * ----- | 12-14 | |

RECHERCHIERTE SACHGEBIETE (IPC)

~~Der vorliegende Recherchenbericht wurde für alle Patentans~~prüche erstellt

| Recherchenort | Abschlußdatum der Recherche | Prüfer |
|---|---|---|
| Den Haag | 27. Oktober 2010 | Bockstahl, Frédéric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................

& : Mitglied der gleichen Patentfamilie, übereinstimmendes Dokument

EPO FORM 1503 03.82 (P04C03)

Europäisches
Patentamt

European
Patent Office

Office européen
des brevets

**Nummer der Anmeldung**

EP 09 17 5995

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1-14

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

# EP 2 322 911 A1

Europäisches Patentamt
European Patent Office
Office européen des brevets

## MANGELNDE EINHEITLICHKEIT DER ERFINDUNG ERGÄNZUNGSBLATT B

Nummer der Anmeldung

EP 09 17 5995

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-11

Verfahren und Vorrichtung zur Bestimmung einer Grössenverteilung von Partikeln, gekennzeichnet durch die folgenden Schritte: a) Herstellung eines Partikel enthaltenden Produktstromes mittels eines Herstellungsverfahrens oder Bereitstellung eines Partikel enthaltenden Produktstromes, welcher mittels eines Herstellungsverfahrens hergestellt wurde, wobei das Herstellungsverfahren ausgewählt ist aus der Gruppe bestehend aus Zerkleinerungs-, Reinigungs-, Trenn-, Misch- und Agglomerationsverfahren oder beliebigen Kombinationen hiervon, b) Erzeugung von Messdaten durch Erfassung zumindest eines Teils der Partikel, wobei die Messdaten wenigstens durch optische Erfassung des Teils der Partikel mittels mindestens zweier verschiedener optischer Messverfahren erzeugt werden, c) Bestimmung zumindest einer Eigenschaft des Teils der Partikel anhand der in Schritt b) optisch erfassten Messdaten, wobei wenigstens eine Eigenschaft die Grössenverteilung des Teils der Partikel ist, wobei mindestens ein optisches Messverfahren die Erfassung eines Beugungsmusters des Teils der Partikel umfasst.
---

2. Ansprüche: 12-14

Probenehmer (1) zur Entnahme einer Probe aus einem in einer Strömungsleitung geführten Produktstrom, enthaltend - einen Schneckenmantel (12), welcher zumindest teilweise in der Strömungsleitung angeordnet oder anordenbar ist, - eine zumindest teilweise im Schneckenmantel (12) aufgenommene Entnahmeschnecke (5) zur Entnahme der Probe, wobei der Schneckenmantel (12) und/oder die Entnahmeschnecke (5) wahlweise in eine Aufnahmeposition (A) oder in eine Bereitschaftsposition (B) bringbar sind, wobei - in der Aufnahmeposition (A) im Produktstrom enthaltene Partikel (2) im Schneckenmantel (12) aufnehmbar sind und - in der Bereitschaftsposition (B) keine im Produktstrom enthaltenen Partikel (2) im Schneckenmantel (12) aufnehmbar sind.
---

3. Anspruch: 15

Verwendung eines zumindest teilweise elektrisch leitenden, transparenten Materials als Sichtfenster (11) zur Reduktion elektrostatischer Partikelanhaftungen am Sichtfenster (11).
---

**ANHANG ZUM EUROPÄISCHEN RECHERCHENBERICHT**
**ÜBER DIE EUROPÄISCHE PATENTANMELDUNG NR.**

EP 09 17 5995

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-10-2010

| Im Recherchenbericht angeführtes Patentdokument | | Datum der Veröffentlichung | Mitglied(er) der Patentfamilie | | Datum der Veröffentlichung |
|---|---|---|---|---|---|
| DE 19802141 | C1 | 22-04-1999 | FR | 2773881 A1 | 23-07-1999 |
| | | | GB | 2333594 A | 28-07-1999 |
| | | | IT | MI990099 A1 | 21-07-2000 |
| | | | JP | 4304266 B2 | 29-07-2009 |
| | | | JP | 11316184 A | 16-11-1999 |
| | | | US | 6061130 A | 09-05-2000 |
| EP 1464949 | A2 | 06-10-2004 | AT | 404860 T | 15-08-2008 |
| | | | US | 2006221338 A1 | 05-10-2006 |
| | | | US | 2004189991 A1 | 30-09-2004 |
| DE 19510034 | A1 | 26-09-1996 | KEINE | | |
| WO 2006116882 | A1 | 09-11-2006 | KEINE | | |
| FR 2258108 | A5 | 08-08-1975 | KEINE | | |
| FR 2628208 | A1 | 08-09-1989 | KEINE | | |
| FR 2421828 | A1 | 02-11-1979 | DK | 155878 A | 08-10-1979 |
| CA 2417333 | A1 | 28-07-2004 | KEINE | | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 19802141 C
- EP 2009055877 W
- EP 2009058351 W
- WO 2006000112 A
- DE 102009014080